# EUROPEAN PATENT SPECIFICATION

(11) **EP 1 621 322 B1**
(45) Date of publication and mention of the grant of the patent: **23.02.2011**
(21) Application number: 05105088.8
(22) Date of filing: 09.06.2005
(51) Int. Cl.: B29C 70/02, B29C 70/32, A01K 87/00, B29K 105/06

(54) **Tubular element made of carbon fiber-based composite material and method of producing the same**
Rohrelement aus Verbundmaterial auf der Basis von Kohlenstofffasern und Verfahren zu dessen Herstellung
Element tubulaire réalisé en matériau composite à base de fibres de carbone et procédé de fabrication d'un tel élément

(30) Priority: 27.07.2004 IT BO20040474
(43) Date of publication of application: 01.02.2006
(73) Proprietor: Pirazzini, Luca, 40123 Bologna (IT)
(72) Inventor: Pirazzini, Luca, 40123 Bologna (IT)
(74) Representative: Modiano, Micaela Nadia

(56) References cited:
- FR-A- 2 711 068
- US-A1- 2002 051 295
- PATENT ABSTRACTS OF JAPAN vol. 2000, no. 05, 14 September 2000 (2000-09-14) -& JP 2000 062032 A (RYOBI LTD), 29 February 2000 (2000-02-29)
- PATENT ABSTRACTS OF JAPAN vol. 2000, no. 02, 29 February 2000 (2000-02-29) & JP 11 309797 A (TOHO RAYON CO LTD), 9 November 1999 (1999-11-09)
- PATENT ABSTRACTS OF JAPAN vol. 013, no. 229 (M-831), 26 May 1989 (1989-05-26) & JP 01 044735 A (SHIMANO & CO LTD), 17 February 1989 (1989-02-17)

## Description

The present invention relates to a tubular element made of carbon fiber-based composite material.

In many fields, particularly in the sports field, it is necessary to resort to tubular elements made of carbon fiber-based composite material (as a consequence of its excellent mechanical characteristics combined with low weight) to manufacture equipment: consider for example fishing rods, but also the masts of windsurfs (or of sailing boats), golf clubs or ski poles.

All these elements need, for various reasons, to have an external surface that is colored (or bears designs or lettering): however, this coloring must not reduce in any way the mechanical properties and must be resistant enough to avoid being abraded during the stresses to which the sports implement is subjected during use.

In particular, fishing rods for the Roubaisienne technique made of carbon fiber are currently the type of fishing rod that has the best mechanical characteristics (by combining an optimum dynamic elastic action with extremely low weight and good resistance to external agents).

The fishing technique that uses fishing rods of the Roubaisienne type requires the segments of the rod, during fishing, to be continuously assembled and disassembled (by mutual insertion) in order to change the length of the rod, making it in each instance suitable for the action being performed.

During fishing, these carbon-fiber fishing rods are subjected to the incidence of solar radiation: after long periods under the sun, their external surface is overheated considerably, and this can cause unpleasant sensations in the angler who has to handle it.

In order to reduce the heating caused by solar irradiation, it would be convenient to provide carbon fiber rods in which the surface is not black and better still non-reflective.

External painting of the rod elements is a scarcely interesting solution, owing to the fact that the deposited layer of paint can alter the elastic response and the thickness of the rod. When using a rod with a painted external surface, it is noted that in a short time the surfaces along which one acts most frequently with one's hands lose their coloring, in practice eliminating the advantages obtained with said coloring.

In order to ensure good resistance of the paint, one might consider abrading slightly the surface of the rod element (before painting) in order to ensure better bonding of the color: this choice necessarily entails damaging the outermost carbon fibers, consequently degrading the mechanical properties of the element being treated.

The application of colored adhesive films is also to be considered extremely negative, since it greatly modifies the elastic response characteristics of the rod element due to the increase in weight that it entails.

In any case, the colored layers modify substantially the external surface of the rod element, generally reducing its slidability.

In fishing with Roubaisienne rods, slidability in the hands of the angler is fundamental, indeed because the fishing action is based on the modularity of the rod, which can be extended or shortened by inserting or removing rod elements. To perform these operations on the rod, it is therefore necessary to slide it in the palm of one's hand: these operations are often performed while a load is applied (a fish hanging from the line or also the weight of the rod itself) and it becomes fundamental for the slidability to be as high as possible.

Excessive heating of the surface by irradiation is a problem also in fishing with telescopic rods, which are provided with a reel.

On the other hand, coloring obtained with conventional methods is not advisable, since it alters the slidability of the line dispensed by the reel on the external surface and causes penalization during casting. When the angler casts the bait towards the intended position, the line in fact unwinds rapidly from the reel and travels rapidly, skimming the external surface of the various rod elements: the lower the friction of the line on the external surface, the greater the distance reached by the bait with the casting action.

Owing to the need to allow to distinguish immediately different segments of the Roubaisienne rod, thus facilitating the organization of the fishing session, and in order to give distinctive characteristics to different telescopic rods (which belong for example to a same series and therefore can be confused easily), it is necessary to provide small portions that are colored differently (and ideally also bear designs, lettering or initial). Currently, this is possible only by painting or screen printing or by applying adhesive laminas.

The need to customize the external surface of the tubular elements or even just give them different colorings so as to allow to distinguish immediately elements that are similar but have different characteristics is also felt in many other fields of sport (for example, for the masts in sailing sports, for golf clubs, for tennis rackets, for ski poles, etc.).

A method to provide a surface covering to a pre-preg wrapped tape tube, is disclosed by the Patent Abstract of Japan Vol. 2000, no. 5, 14 Sept. 2000, JP 2000 062032 A.

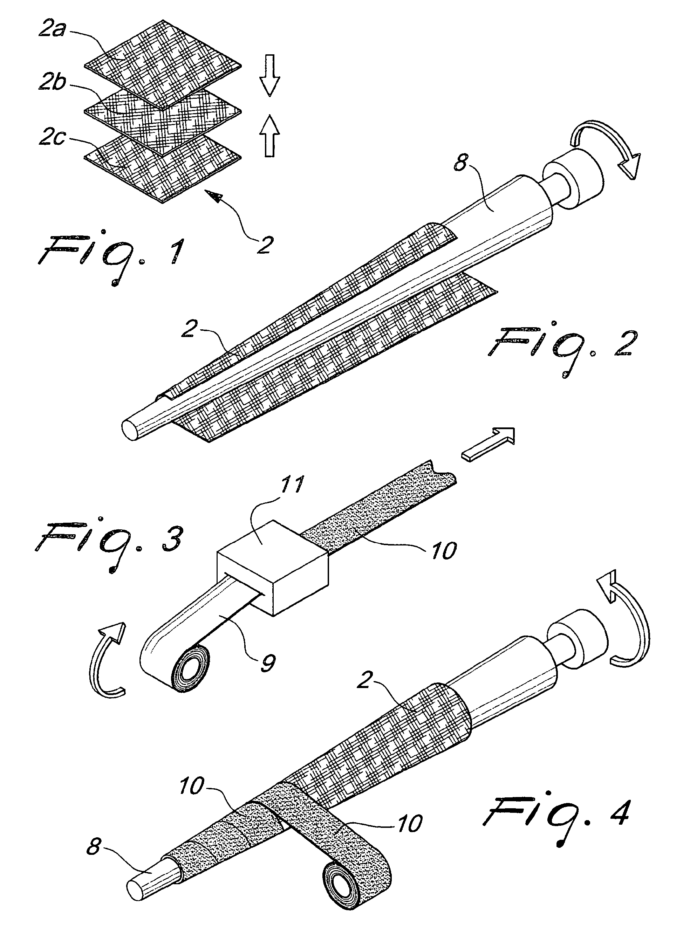

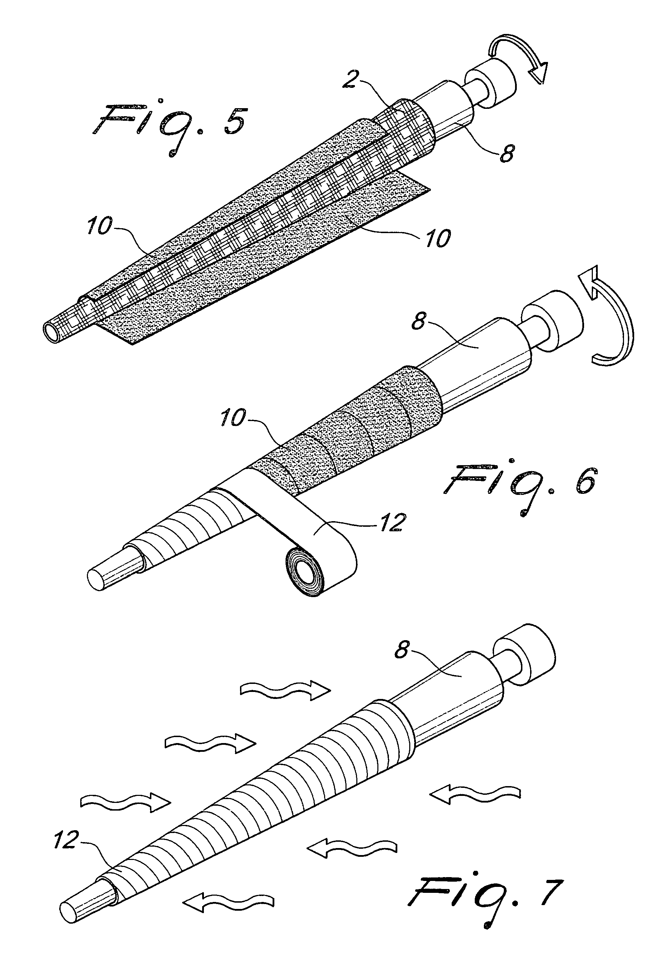

JP 2000-62032 A discloses a laminated tube made by laminating a prepreg (pre-impregnated composite fibers) 3 between a mandrel 2, on which the prepreg is wound spirally in a layer, and a pressurizing, outermost layer 1, made of a material with mold release properties, such as polypropylene, as shown in figure 3 or figure 6.

The pressurizing tape 1 is applied with its rear face on a layer of a fluid/liquid mix 8 made of high hardness particles 4, solid lubricant powder 5 and a coloring agent 6 in a liquid resin 7.

The mandrel 2 with the prepreg 3 wound, the mix 8 applied by spraying or brush and the tape 1 wound thereon are heat-baked. Upon heating the mix 8 with its liquid resin 7 and other components mixes with the soften resin impregnated in the prepreg 3 to eventually harden so that the high hardness particles 4 locate towards the face of the outer face of the prepreg 3 (figure 4).

The tape 1 is finally removed and the laminated tube is obtained (figure 4) consisting of the prepreg 3 with the outer face formed by the particles 4 of the mix 8.

The aim of the present invention is to obviate the cited drawbacks and meet the mentioned requirements, by providing a tubular element made of pigmented composite material that does not have variations in weight, thickness and roughness in the transition from a pigmented region to a non-pigmented region.

Positively, an object of the present invention is to provide a tubular element that has distinctive surface colorings that preserve its mechanical properties.

Advantageously, another object of the present invention is to provide a tubular element that has high surface slidability.

Within this aim and these objects, another object of the present invention is to provide a tubular element that is simple, relatively easy to provide in practice, safe in use, effective in operation, and has a relatively low cost.

This aim and these and other objects that will become better apparent hereinafter are achieved by a tubular element according to the invention, as set forth in claim 1.

A method for providing a tubular element made of composite material, according to the invention, has the steps set forth in claim 11.

Further characteristics and advantages of the present invention will become better apparent from the following detailed description of a preferred but not exclusive embodiment of a tubular element made of carbon fiber, illustrated by way of non-limiting example in the accompanying drawings, wherein:
Figure 1 is a schematic perspective view of a plurality of layers of structural fibers immersed in a polymeric matrix and superimposed;
Figure 2 is a schematic perspective view of the arrangement of the layers on a rigid core;
Figure 3 is a schematic perspective view of the deposition of a film of color on the surface of a tape made of a material such as plastics;
Figure 4 is a schematic perspective view of the wrapping of a pigmented tape, according to a first method with a pitch that corresponds approximately to the width of said tape with partial overlap, on the layers of fibers arranged on the rigid core;
Figure 5 is a schematic perspective view of the wrapping of a pigmented tape, according to a second method with an infinite pitch, on the layers of fibers arranged on the rigid core;
Figure 6 is a schematic perspective view of the wrapping, over said pigmented tape, of a second pressing tape with a tight pitch;
Figure 7 is a schematic perspective view of the heating of the element on which the two tapes are wrapped;

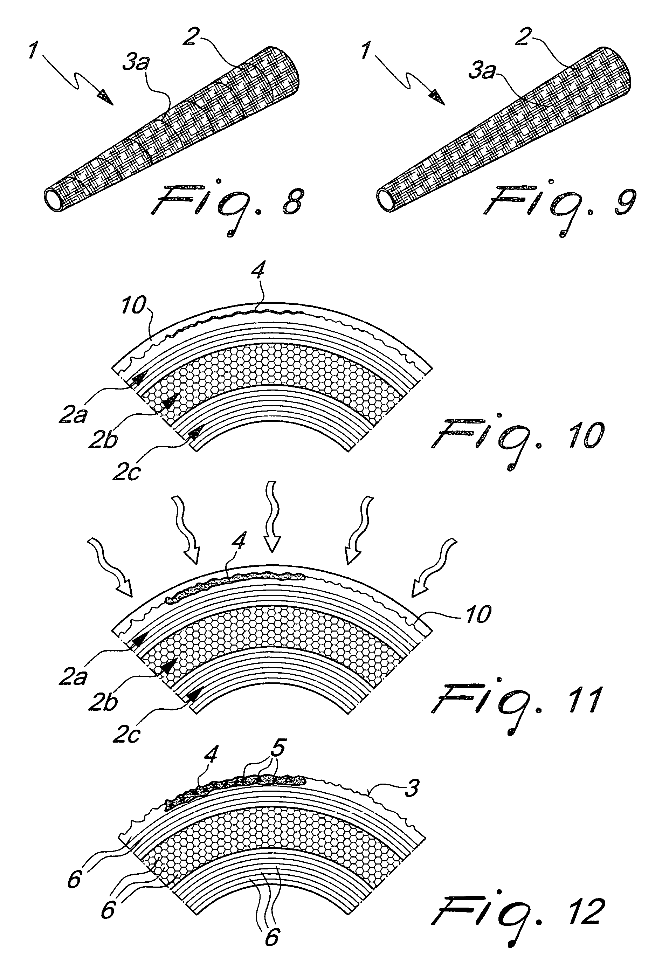

Figure 8 is a schematic perspective view of a tubular element according to the invention;
Figure 9 is a schematic perspective view of a tubular element according to the invention;
Figure 10 is an enlarged-scale sectional view of a portion of a tubular element around which a pigmented tape is wrapped;
Figure 11 is an enlarged-scale sectional view of a portion of a tubular element around which a pigmented tape is wrapped, during thermoforming;
Figure 12 is an enlarged-scale sectional view of a portion of a tubular element according to the invention.

With reference to the figures, a tubular element made of composite material according to the invention is generally designated by the reference numeral 1.

The description that follows describes an element 1 for fishing rods; this description is non-limiting to the only embodiment that is described, since the characteristics that are given and the manufacturing method used are the same for all the types of element 1 that can be provided, be they components of fishing rods, of masts for sailing sports, of tennis rackets, ski poles, or others.

Each element 1 of the fishing rod is constituted by a plurality of layers 2 (2a, 2b and 2c) made of composite material (structural fibers and polymeric matrix), which are superimposed and are arranged so that their fibers lie along presets directions, in order to optimize the mechanical characteristics of the layer 2 in those directions.

In each one of these layers 2, the fibers (generally carbon fibers, but as an alternative it is also possible to use glass fibers or other materials) are embedded in a matrix of the polymeric type; such matrix is generally constituted by a thermosetting resin (for example epoxy resin), which is polymerized in the final step of production of the tubular element 1, which is known as thermoforming.

In a particularly effective embodiment, the outermost layer 2a of an element 1 provided according to the invention has, on its outer surface, a uniformly distributed infinitesimal surface roughness 3.

The presence of this infinitesimal roughness 3, combined with the surface hardness of the element 1 caused by the mechanical characteristics of the resin that impregnates the layers 2, facilitates the sliding of the hands of the angler on the surface: microscopic amounts of humidity may remain trapped in the successive continuous hollows of the surface, providing substantially a sort of lubrication.

With respect to the smooth surface of conventional fishing rods, there is a considerable improvement of the fishing action, caused by the immediate slidability, with a considerable reduction of the abrasion of the palm of the hand of the user in case of prolonged use.

As already mentioned, the described solution relates to elements 1 of a fishing rod, but actually surface slidability is advantageous in many situations that recur also in other sports: consider for example the bag of a sail that must be able to slide easily on the mast of a windsurf, for example.

In other embodiments, the surface of the element 1 can also be completely smooth (polished) or have any degree of surface roughness comprised between the two extreme cases of a smooth (polished) surface and of a surface with infinitesimal roughness 3 (intrinsic opacity).

The polymeric matrix of the outermost layer 2a contains a predefined quantity of at least one color: the pigmented resin 4 (part of the matrix of layer 2a within which the color is present) ensures reflection of part of the solar radiation that strikes the fishing rod element 1, keeping its temperature at lower values than conventional fishing rods.

Conventional fishing rods made of a composite based on carbon fiber are externally black and polished: because of these surface characteristics, they can reach high temperatures (which as such are unpleasant or painful upon contact with the hands, as already mentioned following continuous assembly and disassembly of the component segments) due to solar irradiation.

The color is not distributed on the outer surface of the layer 2a: the elementary color particles 5 that are present in the pigmented resin 4 are in the layer 2a, since they are diffused in the polymeric matrix in the region that faces the external surface.

In practice, the particles 5 are embedded in the polymeric resin, which constitutes the matrix of the composite of the layer 2a at its outermost region, giving a particular coloring to the element 1 from an intrinsic standpoint (one of the components of the layer 2a, the polymeric resin, in fact assumes the coloring determined by the presence of the color particles 5).

The surface of the layer 2a does not undergo any change in roughness 3 as a consequence of the presence of the particles of color 5.

The external surface of the layer 2a generally has a ridge 3a, which is arranged in a spiral along the element 1 and has a reduced height; in certain cases, the ridge 3a can also be substantially imperceptible or even omitted.

The structural fibers 6 (carbon fibers) of the layer 2a are substantially intact and have no internal tensions caused by the presence of particles of color 5 in the pigmented resin 4 interposed between individual fibers 6: this is because the penetration of the particles of color 5 does not affect the entire layer 2a but affects only the outermost region (without therefore affecting the structural fibers 6) and because the particles 5 are embedded uniformly in the polymeric resin that constitutes the matrix.

The particles of color 5 are provided inside the matrix of the polymeric type (they are embedded in it) in a variable quantity and are uniformly distributed: this ensures that the appearance of the fishing rod element 1 is uniform in terms of color distribution, ensuring that even if the amount of color particles 5 is small, it is not possible to identify regions that are more (or less) colored.

Optionally, the particles of color 5 can be distributed only on some portions of the rod element 1: in this manner, it is possible to provide on the surface of the rod element 1 shapes and particular color combinations, according for example to a distinctive symbol or mark. The advantage of this embodiment is that the mark thus impressed is not subjected to abrasion, since the color is mixed, in the external region of the layer 2a, with the polymeric matrix of the layer 2a.

Another possibility is to provide the pigmented resin 4 with a mixture of elementary pigments 5 of different colors, obtaining any type of color or design on the surface of the rod element 1.

This refinement is obviously of great interest for all sectors in which tubular elements 1 are used. In particular in the sports field, it is extremely useful to be able to give particular colorings or imprint markings or distinctive designs on the surface of the equipment in order to facilitate its use and improve its appearance.

The particles of color 5 and the polymeric matrix have a glass transition temperature on the same order of magnitude: in this manner, during thermoforming the particles of color 5 can diffuse inside the matrix (which in this step undergoes an initial softening) without risking that one of the two materials hardens before the other or, worse still, degrades as a consequence of an excessively high temperature.

In order to obtain the tubular element 1, it is necessary to superimpose at least two layers of structural fibers 2 impregnated with polymeric resin, shaping them substantially like a tubular body by wrapping around a rigid core 8 (which is generally metallic).

It is necessary to deposit beforehand, with the intended distribution, at least one type of particle of color 5 on a tape 9: the tape 9 can be completely smooth (shiny) on both of its flat surfaces or can be provided with at least one surface that has at an infinitesimal surface roughness 3.

If the surface with infinitesimal surface roughness 3 is provided, the deposition is to be provided on said surface.

The color particles 5 must be deposited according to traditional processes, such as a rotogravure or actual painting (or also flexography, screen printing, or any other method suitable for the purpose), within a suitable apparatus 11.

At this point, it is necessary to wrap the pigmented tape 10 over the layers 2 of structural fibers wrapped around the core 8, keeping it with the pigmented surface in contact with the outermost layer of fibers, and with a substantially helical path.

If one wishes to wrap the tape 10 with an infinite (or nil) pitch, the tape 10 is arranged longitudinally with respect to the element 1 (or transversely, if the tape 10 is arranged with a nil pitch and is therefore as wide as the element 1 is long).

A second wrapping, which this time is tighter and more forced, above the wrapped pigmented tape 10 must be performed with an additional pressing tape 12, again with a helical arrangement but this time with a tight pitch.

After performing the second wrapping, the core 8, the layers of fibers 2 and the wrapped tapes 10 and 12 must be arranged in a high-temperature environment in order to facilitate the diffusion of the color particles 5 within the polymeric matrix of the outermost layer 2a, in order to impart the infinitesimal surface roughness 3 of the pigmented tape 10 (therefore, if a tape with these surface characteristics has been chosen) on the outer surface of the outermost layer 2a and in order to facilitate the cross-linking of the polymer that constitutes the thermoforming matrix.

The tape provided with at least one surface having infinitesimal surface roughness 3 is made of a material of the thermoplastic type, suitable for the temporary adhesion of the color particles 5 but not for permanent adhesion (thus facilitating the separation of said particles during thermoforming and their migration toward the inside of the matrix of the layer 2a).

After the thermoforming step, the tubular element 1 is extracted from the core 8 and the tapes 10 and 12 are removed from the surface of the element 1, which therefore retains the coloring due to the diffusion of the color particles 5 (released by the tape 10) inside the layer 2a, and the infinitesimal surface roughness 3 imparted by the tape 10.

The operation of the invention is intuitive: by using a fishing rod constituted by elements 1 according to the invention, the angler is facilitated in his action owing to the high surface slidability caused by the presence of the infinitesimal roughness 3 of its surface. As mentioned, trapping particles of water in the minute cavities and recesses of the surface of the element 1 ensures maximum slidability thereof in the palm of the hand of the angler. This slidability can be identified immediately even in fishing rods of the telescopic type since the line, released by the reel, during launching glides on the surface with maximum slidability. It should be noted that the infinitesimal roughness 3 decreases the aerodynamic drag of the fishing rod during casting. Likewise, the bag of the sail of a windsurf slides easily along the shaft, facilitating its assembly.

The surface further has a particular coloring caused by the diffusion of the color inside the polymeric matrix: in this manner, the tubular element 1 can be provided in any color (according to the technical requirements of the user but also according to commercial requirements).

Advantageously, said coloring does not abrade with use and it is not possible to detect an increase in thickness at the regions where the color is applied.

Conveniently, the addition of weight is undetectable, since the color is embedded within the polymeric matrix and therefore the amount of color required to give the intended color is very low.

Conveniently, the method for obtaining the element 1 is far less pollutant than conventional solutions for surface coloring, since the amount of color needed to give the chosen color is low and also the dispersion of color is minimum, since the deposition of the color is performed on a tape (not directly on the surface of the element 1) according to highly efficient methods, which also require (with respect to conventional painting) the use of lower amounts of solvents.

Positively, the color is distributed uniformly along the rod element 1 (according to the requirements of the manufacturer) without producing internal tensions between contiguous fibers caused by the interposition of particles 5.

The provision of tubular elements 1 according to the invention further allows to imprint flight designs (even logos or lettering) to the element 1 according to the described method. Although these imprintings do not modify the mechanical and structural characteristics of the rod element 1, they can give it a distinctiveness with respect to other similar products, ensuring differentiation of production.

It has thus been shown that the invention achieves the intended aim and objects.

The invention thus conceived is susceptible of numerous modifications and variations, all of which are within the scope of the appended claims.

All the details may further be replaced with other technically equivalent ones.

In the embodiments that follow, individual characteristics, given in relation to specific examples, may actually be interchanged with other different characteristics that exist in other embodiments.

Moreover, it is noted that anything found to be already known during the patenting process is understood not to be claimed and to be the subject of a disclaimer.

In practice, the materials used, as well as the shapes and dimensions, may be any according to requirements without thereby abandoning the scope of the protection of the appended claims.

## Claims

1. A tubular element made of composite material, comprising at least two layers (2a, 2b, 2c) each made of structural fibers embedded in a polymeric matrix, and which are wrapped superimposed and arranged so that the fibers (6) lie along preset directions in order to optimize the mechanical characteristics of said layers (2a, 2b, 2c), said fibers (6) being immersed in a matrix of the polymeric type, and a predefined amount of particles of at least one color (5) that is provided diffused in the polymeric matrix of the outermost layer (2a), substantially only between the outermost surface thereof and the region where the fibers (6) are arranged, the color particles (5) and said polymeric matrix having a glass transition temperature on the same order of magnitude.

2. The element according to claim 1, **characterized in that** said outer surface has at least one ridge (3a), which is arranged along said element and is less than 120 micrometers high.

3. The element according to claim 1, **characterized in that** said outermost layer (2a) has, along its outer surface, an infinitesimal and uniformly distributed surface roughness (3), which is intrinsic to the matrix, said outer surface having an opaque appearance.

4. The element according to claim 1, **characterized in that** the particles (5) of color that are present in the polymeric matrix in the outermost layer (2a) of fibers (6) have a regular spatial distribution according to all longitudinal, radial and angular coordinates.

5. The element according to claim 1, **characterized in that** said outermost layer (2a) does not have internal tensions and degradations caused by the presence of said color particles.

6. The element according to one or more of the preceding claims, **characterized in that** said predefined quantity of particles of at least one color is distributed uniformly over the entire surface of said element (1).

7. The element according to one or more of the preceding claims, **characterized in that** said predefined quantity of particles of at least one color is distributed only on some portions of the surface of said clement (1).

8. The element according to one or more of the preceding claims, **characterized in that** said redefined quantity of particles of at least one color is distributed according to the shape and color of at least one distinctive marking.

9. The element according to one or more of the preceding claims, **characterized in that** said predefined quantity of particles of at least one color is constituted by a mixture of elementary pigments of different colors.

10. The element according to one or more of the preceding claims, **characterized in that** said predefined quantity of particles of at least one color is divided among a plurality of spots distributed on the surface of the element (1).

11. A method for providing a tubular element made of composite material, comprising the steps of:
superimposing at least two layers (2a, 2b, 2c) of structural fibers impregnated with polymeric resin that form a polymeric matrix, shaping them substantially like a tube by wrapping around a rigid core (8);
depositing, with the intended distribution, a redefined amount of particles of at least one color on at least one surface of a tape (9), providing a pigmented tape (10), the color particles (5) and the polymeric matrix having a glass transition temperature on the same order of magnitude;
wrapping said pigmented tape (10) around the layers (2a, 2b, 2c) wrapped around said core (8), with the pigmented surface in contact with the outermost layer (2a);
wrapping, by tightening and forcing it, on the layers (2a, 2b, 2c) wound around said core (8), above said pigmented layer (10), a second pressing tape (12), which has a tight helical pitch in order to compress the layers (2a, 2b, 2c) and the pigmented tape (10) on said core (8);
placing the core (8), the layers (2a, 2b, 2c) and the wrapped tapes (10) and (12) in a high-temperature environment in order to facilitate the diffusion of the color particles inside the polymeric matrix of the outermost layer (2a) and simultaneously facilitate the cross-linking of the polymer that constitutes said matrix for thermoforming.

12. The method according to claim 11, **characterized in that** said tape (9) is provided with at least one surface that has an infinitesimal surface roughness (3) with an opaque appearance, and **in that** said deposition of said color is to be provided on the surface that has said roughness (3).

13. The method according to claim 11, **characterized in that** after the thermoforming step said second pressing tape (12) and said pigmented tape (10) are removed from the tubular element (1), from which the core (8) is also extracted.

14. The method according to claim 11, **characterized in that** the wrapping of said pigmented layer (10) has a substantially helical orientation with an optionally infinite pitch.

15. The method according to claim 11 and as an alternative to claim 14, **characterized in that** the wrapping of said pigmented tape (10) is substantially helical with an optionally nil pitch.

16. The method according to claim 11, **characterized in that** said tape (9) provided with at least one surface that has an infinitesimal surface roughness (3) and an opaque appearance is made of a material such as thermoplastic resin, which is suitable for temporary adhesion but not for permanent adhesion of the color particles.

## Patentansprüche

1. Ein rohrförmiges Element aus Verbundmaterial, das Folgendes umfasst: mindestens zwei Schichten (2a, 2b, 2c), die jeweils aus in eine Polymermatrix eingebetteten Strukturfasern bestehen und übereinandergelagert gewickelt und so angeordnet sind, dass die Fasern (6) entlang vordefinierten Richtungen liegen, um die mechanischen Eigenschaften der Schichten (2a, 2b, 2c) zu optimieren, wobei die Fasern (6) in eine Matrix des Polymertyps eingebettet sind, und eine vordefinierte Menge von Partikeln von mindestens einer Farbe (5), die diffundiert in der Polymermatrix der äußersten Schicht (2a) bereitgestellt ist, im Wesentlichen nur zwischen der äußersten Oberfläche davon und dem Bereich, in dem die Fasern (6) angeordnet sind, wobei die Farbpartikel (5) und die Polymermatrix eine Glasübergangstemperatur in derselben Größenordnung haben.

2. Das Element gemäß Anspruch 1, **dadurch gekennzeichnet, dass** die äußere Oberfläche mindestens einen Grat (3a) hat, der entlang dem Element angeordnet und weniger als 120 Mikrometer hoch ist.

3. Das Element gemäß Anspruch 1, **dadurch gekennzeichnet, dass** die äußerste Schicht (2a) entlang ihrer äußeren Oberfläche eine unendlich kleine und einheitlich verteilte Oberflächenrauheit (3) hat, die der Matrix inhärent ist, wobei die äußere Oberfläche ein lichtundurchlässiges Erscheinungsbild hat.

4. Das Element gemäß Anspruch 1, **dadurch gekennzeichnet, dass** die Farbpartikel (5), die in der Polymermatrix in der äußersten Schicht (2a) der Fasern (6) vorhanden sind, eine regelmäßige räumliche Verteilung nach allen Längs-, Radial- und Winkelkoordinaten haben.

5. Das Element gemäß Anspruch 1, **dadurch gekennzeichnet, dass** die äußerste Schicht (2a) keine inneren Spannungen und Zersetzungen hat, die durch die Anwesenheit der Farbpartikel verursacht würden.

6. Das Element gemäß einem oder mehreren der obigen Ansprüche, **dadurch gekennzeichnet, dass** die vordefinierte Menge von Partikeln mindestens einer Farbe gleichmäßig über die gesamte Oberfläche des Elements (1) verteilt ist.

7. Das Element gemäß einem oder mehreren der obigen Ansprüche, **dadurch gekennzeichnet, dass** die vordefinierte Menge von Partikeln mindestens einer Farbe nur auf einigen Abschnitten der Oberfläche des Elements (1) verteilt ist.

8. Das Element gemäß einem oder mehreren der obigen Ansprüche, **dadurch gekennzeichnet, dass** die vordefinierte Menge von Partikeln mindestens einer Farbe entsprechend der Form und Farbe mindestens einer kennzeichnenden Markierung verteilt ist.

9. Das Element gemäß einem oder mehreren der obigen Ansprüche, **dadurch gekennzeichnet, dass** die vordefinierte Menge von Partikeln mindestens einer Farbe aus einer Mischung von Elementarpigmenten verschiedener Farben besteht.

10. Das Element gemäß einem oder mehreren der obigen Ansprüche, **dadurch gekennzeichnet**, das die vordefinierte Menge von Partikeln mindestens einer Farbe auf eine Vielzahl von Punkten aufgeteilt wird, die auf der Oberfläche des Elements (1) verteilt sind.

11. Ein Verfahren zur Bereitstellung eines rohrförmige Elements aus Verbundmaterial, das folgende Schritte umfasst:
Aufeinanderlegen mindestens zweier Schichten (2a, 2b, 2c) von mit Polymerharz imprägnierten Strukturfasern, die eine Polymermatrix bilden, wobei sie durch Wickeln um einen starren Kern (8) im Wesentlichen wie ein Rohr geformt werden;
Ablagerung, mit der gewünschten Verteilung, einer vordefinierten Menge von Partikeln von mindestens einer Farbe auf mindestens eine Oberfläche eines Bands (9), wodurch ein pigmentiertes Band (10) bereitgestellt wird, wobei die Farbpartikel (5) und die Polymermatrix eine Glasübergangstemperatur in derselben Größenordnung haben;
Wickeln des pigmentierten Bands (10) um die Schichten (2a, 2b, 2c), die um den Kern (8) gewickelt sind, wobei die pigmentierte Oberfläche in Kontakt mit der äußersten Schicht (2a) steht;
Wickeln, durch Festziehen und Zwingen desselben, auf die um den Kern (8) gewundenen Schichten (2a, 2b, 2c), über der pigmentierten Schicht (10), eines zweiten Druckbands (12), das eine enge Spiralsteigung hat, um die Schichten (2a, 2b, 2c) und das pigmentierte Band (10) auf den Kern (8) zu pressen;
Platzieren des Kerns (8), der Schichten (2a, 2b, 2c) und der gewickelten Bänder (10) und (12) in eine Hochtemperaturumgebung, um die Diffusion der Farbpartikel in die Polymermatrix der äußersten Schicht (2a) zu erleichtern und gleichzeitig die Quervernetzung des Polymers, welches die Matrix für die Thermoformung bildet, zu erleichtern.

12. Das Verfahren gemäß Anspruch 11, **dadurch gekennzeichnet, dass** das Band (9) mit mindestens einer Oberfläche versehen ist, die eine unendlich kleine Oberflächenrauheit (3) mit einem lichtundurchlässigen Erscheinungsbild hat, und **dadurch**, dass das Auftragen der Farbe auf die Oberfläche stattfinden soll, die die Rauheit (3) hat.

13. Das Verfahren gemäß Anspruch 11, **dadurch gekennzeichnet, dass** nach dem Schritt der Thermoformung das zweite Druckband (12) und das pigmentierte Band (10) vom rohrförmigen Element (7) entfernt werden, aus dem auch der Kern (8) herausgezogen wird.

14. Das Verfahren gemäß Anspruch 11, **dadurch gekennzeichnet, dass** die Wicklung der pigmentierten Schicht (10) eine im Wesentlichen schraubenförmige Ausrichtung mit einer wahlweise unendlichen Steigung hat.

15. Das Verfahren gemäß Anspruch 11 und als Alternative zu Anspruch 14, **dadurch gekennzeichnet, dass** die Wicklung des pigmentierten Bands (10) im Wesentlichen schraubenförmig, wahlweise mit einer Nullsteigung, ist.

16. Das Verfahren gemäß Anspruch 11, **dadurch gekennzeichnet, dass** das Band (9), das mit mindestens einer Oberfläche versehen ist, die eine unendlich kleine Oberflächenrauheit (3) und ein lichtundurchlässiges Erscheinungsbild hat, aus einem Material wie zum Beispiel thermoplastischem Harz besteht, das zur vorübergehenden Adhäsion, aber nicht zur permanenten Adhäsion der Farbpartikel, geeignet ist.

## Revendications

1. Élément tubulaire constitué d'un matériau composite, comprenant au moins deux couches (2a, 2b, 2c) chacune constituée de fibres structurelles noyées dans une matrice polymérique, et qui sont enveloppées, superposées et agencées de telle manière que les fibres (6) reposent dans des sens prédéfinis afin d'optimiser les caractéristiques mécaniques desdites couches (2a, 2b, 2c), lesdites fibres (6) étant immergées dans une matrice du type polymérique, et une quantité prédéfinie de particules d'au moins une couleur (5) qui est prévue diffusée dans la matrice polymérique de la couche la plus extérieure (2a), sensiblement uniquement entre la surface la plus extérieure de celle-ci et la région où les fibres (6) sont agencées, les particules de couleur (5) et ladite matrice polymérique ayant une température de transition vitreuse du même ordre de grandeur.

2. Élément selon la revendication 1, **caractérisé en ce que** ladite surface extérieure a au moins une nervure (3a), qui est agencée le long dudit élément et a une hauteur inférieure à 120 micromètres.

3. Élément selon la revendication 1, **caractérisé en ce que** ladite couche la plus extérieure (2a) a, le long de sa surface extérieure, une rugosité de surface (3) infinitésimale et uniformément répartie, qui est intrinsèque à la matrice, ladite surface extérieure ayant un aspect opaque.

4. Élément selon la revendication 1, **caractérisé en ce que** les particules (5) de couleur qui sont présentes dans la matrice polymérique dans la couche la plus extérieure (2a) des fibres (6) ont une répartition spatiale régulière selon la totalité des coordonnées longitudinales, radiales et angulaires.

5. Élément selon la revendication 1, **caractérisé en ce que** ladite couche la plus extérieure (2a) ne présente pas de tensions, ni de dégradations, internes causées par la présence desdites particules de couleur.

6. Élément selon une ou plusieurs des revendications précédentes, **caractérisé en ce que** ladite quantité prédéfinie de particules d'au moins une couleur est répartie uniformément sur la totalité de la surface dudit élément (1).

7. Élément selon une ou plusieurs des revendications précédentes, **caractérisé en ce que** ladite quantité prédéfinie de particules d'au moins une couleur n'est répartie que dans certaines parties de la surface dudit élément (1).

8. Élément selon une ou plusieurs des revendications précédentes, **caractérisé en ce que** ladite quantité prédéfinie de particules d'au moins une couleur est répartie en fonction de la forme et de la couleur d'au moins une marque distinctive.

9. Élément selon une ou plusieurs des revendications précédentes, **caractérisé en ce que** ladite quantité prédéfinie de particules d'au moins une couleur est constituée par un mélange de pigments élémentaires de différentes couleurs.

10. Élément selon une ou plusieurs des revendications précédentes, **caractérisé en ce que** ladite quantité prédéfinie de particules d'au moins une couleur est divisée parmi une pluralité de points répartis sur la surface de l'élément (1).

11. Procédé de fabrication d'un élément tubulaire constitué d'un matériau composite, comprenant les étapes de :
superposition d'au moins deux couches (2a, 2b, 2c) de fibres structurelles imprégnées avec une résine polymérique qui forment une matrice polymérique, mise en forme de celles-ci sensiblement comme un tube par enveloppement autour d'un coeur rigide (8) ;
dépôt, avec la répartition prévue, d'une quantité prédéfinie de particules d'au moins une couleur sur au moins une surface d'un ruban (9), donnant un ruban pigmenté (10), les particules de couleur (5) et la matrice polymérique ayant une température de transition vitreuse du même ordre de grandeur ;
enveloppement dudit ruban pigmenté (10) autour des couches (2a, 2b, 2c) enveloppées autour dudit coeur (8), la surface pigmentée étant en contact avec la couche la plus extérieure (2a) ;
enveloppement, par serrage et forçage de celui-ci, sur les couches (2a, 2b, 2c) enveloppées autour dudit coeur (8), par-dessus ladite couche pigmentée (10), d'un deuxième ruban de pressage (12), qui a un pas hélicoïdal serré afin de compresser les couches (2a, 2b, 2c) et le ruban pigmenté (10) sur ledit coeur (8) ;
placement du coeur (8), des couches (2a, 2b, 2c) et des rubans (10) et (12) enveloppés dans un environnement à température élevée afin de faciliter la diffusion des particules de couleur à l'intérieur de la matrice polymérique de la couche la plus extérieure (2a) et de faciliter simultanément la réticulation du polymère qui constitue ladite matrice pour thermoformage.

12. Procédé selon la revendication 11, **caractérisé en ce que** ledit ruban (9) est prévu avec au moins une surface qui a une rugosité de surface (3) infinitésimale avec un aspect opaque, et **en ce que** ledit dépôt de ladite couleur est destiné à être prévu sur la surface qui a ladite rugosité (3).

13. Procédé selon la revendication 11, **caractérisé en ce que**, après l'étape de thermoformage, ledit deuxième ruban de pressage (12) et ledit ruban pigmenté (10) sont enlevés de l'élément tubulaire (1), duquel le coeur (8) est également extrait.

14. Procédé selon la revendication 11, **caractérisé en ce que** l'enveloppement de ladite couche pigmentée (10) a une orientation sensiblement hélicoïdale avec un pas facultativement infini.

15. Procédé selon la revendication 11 et comme une alternative à la revendication 14, **caractérisé en ce que** l'enveloppement de ladite couche pigmentée (10) est sensiblement hélicoïdal avec un pas facultativement nul.

16. Procédé selon la revendication 11, **caractérisé en ce que** ledit ruban (9) prévu avec au moins une surface qui a une rugosité de surface (3) infinitésimale et un aspect opaque est constitué d'un matériau tel qu'une résine thermoplastique, qui est approprié à une adhérence temporaire, mais pas à une adhérence permanente, des particules de couleur.
